# EUROPÄISCHE PATENTSCHRIFT

(11) **EP 0 853 566 B1**
(45) Veröffentlichungstag und Bekanntmachung des Hinweises auf die Patenterteilung: **31.10.2001**
(21) Anmeldenummer: 97923801.1
(22) Anmeldetag: 10.05.1997
(51) Int. Cl.: B60S 1/38

(54) **WISCHBLATT FÜR SCHEIBEN VON KRAFTFAHRZEUGEN**
WIPER BLADE FOR MOTOR VEHICLE WINDSHIELDS
LAME D'ESSUIE-GLACE POUR LES VITRES DE VEHICULES A MOTEUR

(30) Priorität: 05.07.1996 DE 19627115
(43) Veröffentlichungstag der Anmeldung: 22.07.1998
(73) Patentinhaber: ROBERT BOSCH GMBH, 70442 Stuttgart (DE)
(72) Erfinder: MERKEL, Wilfried, D-77876 Kappelrodeck (DE); KOTLARSKI, Thomas, D-77830 Bühlertal (DE)
(86) Internationale Anmeldenummer: DE9700950
(87) Internationale Veröffentlichungsnummer: WO9801328

(56) Entgegenhaltungen:
- WO-A-95/23714
- DE-A- 3 827 875
- US-A- 3 192 551
- US-A- 3 430 285

## Beschreibung

### Stand der Technik

Die Erfindung geht aus von einem Wischblatt nach dem Oberbegriff des Anspruchs 1. Bei einem bekannten Wischblatt dieser Art (DE-A-26 14 457 A1) ist das den Anpressdruck des Wischblatts auf der Scheibe über die gesamte Länge der Wischleiste verteilende Tragelement mit einem schlitzartigen Längsdurchbruch versehen, durch welchen eine Längsrippe der Wischleiste von der einen Tragelementseite aus hindurchgreift wobei deren anderes Ende so verdickt ist, daß es auf der anderen Seite eine Halterung oder Sicherung gegen unbeabsichtigtes Lösen der Wischleiste vom Tragelement bildet. Die Längsschienen des Tragelements kommen dabei in Längsnuten der Wischleiste zu liegen, welche an ihren Längsseiten einerseits durch den Körper der Wischleiste und andererseits durch die Verdickung der Längsrippe begrenzt sind. Zur Montage der Wischleiste am Tragelement muß die Wischleiste von Hand durch eine partielle Schlitzverbreiterung in dessen Längsschlitz eingefädelt werden, was aber sehr aufwendig und damit teuer ist.

### Vorteile der Erfindung

Die beiden einzelnen Längsschienen sind besonders einfach herzustellen, da sie beispielsweise lediglich von einem entsprechend dimensionierten Materialband abgetrennt zu werden brauchen. Die Sicherung der beiden Längsschienen in den Längsnuten der Wischleiste mittels der als Massenteile gefertigten Klammern kann kostengünstig mittels eines Montageautomaten durchgeführt werden.

Besonders einfach und damit kostengünstig läßt sich eine Querschnittsverringerung des über seine gesamte Länge gleichdicken Tragelements erreichen, wenn diese durch eine Verringerung der Breite des Tragelements realisiert ist, wobei sich die größte Breite im Mittelabschnitt des Tragelements befindet.

Je nach Auswahl des Materials für die Klammern kann es zweckmäßig sein, wenn diese kraftschlüssig oder formschlüssig mit den Längsschienen verbunden sind. Selbstverständlich ist auch eine kraft- und formschlüssige Verbindung möglich.

Für den Fall, daß die Längserstreckung des Tragelements ein bestimmtes Maß übersteigt, so daß sich eine gewisse Labilität der Längsschienen ergibt, kann die erforderliche Stabilität des Tragelements dadurch sichergestellt werden, daß zwischen den beiden an den Enden der Längsschienen angeordneten Klammern wenigstens eine Zwischenklammer angeordnet ist, welche die voneinander abgewandten Längskanten der Längsschienen mit Krallenansätzen umgreift.

Eine zusätzliche Vereinfachung des Wischblatts ergibt sich, wenn nach der Erfindung die weitere Klammer mit einer Anschlußvorrichtung für den angetriebenen Wischerarm ausgestattet ist.

Wenn zumindest die Längsschienen des Tragelements aus Federbandstahl hergestellt sind, kann ein besonders niedrig bauendes Wischblatt erzielt werden, das gute Eigenschaften hinsichtlich der vor der Windschutzscheibe vorhandenen Strömungsverhältnisse der anströmenden Luft aufweist.

Weitere Vorteile und Verbesserungen des Wischblatts sind in der nachfolgenden Beschreibung eines Ausführungsbeispiels zu entnehmen, das anhand der Zeichnung erläutert wird.

### Zeichnung

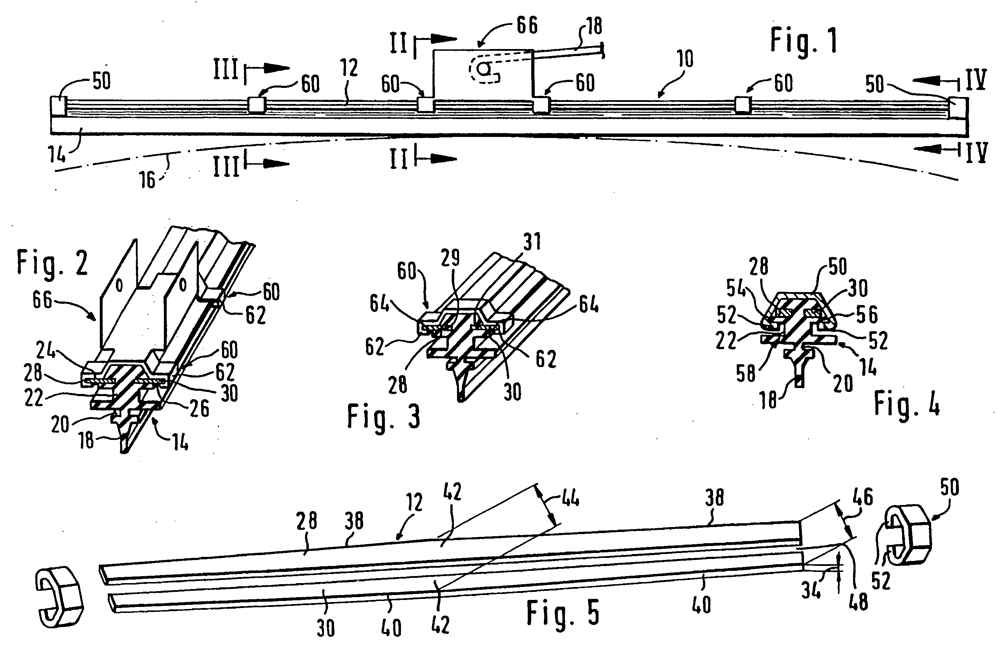

Es zeigen Figur 1 eine Seitenansicht eines erfindungsgemäßen Wischblatts, Figur 2 einen Schnitt durch das Wischblatt entlang der Linie II-II in Figur 1, mit einem perspektivisch dargestellten Mittelabschnitts des Wischblatts in vergrößerter Darstellung, Figur 3 einen Schnitt durch das Wischblatt entlang der Linie III-III in Figur 1, mit einem perspektivisch dargestellten Zwischenabschnitt des Wischblatts, in vergrößerter Darstellung, Figur 4 die Schnittfläche eines Schnitts durch das Wischblatt entlang der Linie IV-IV in Figur 1 in vergrößerter Darstellung und Figur 5 eine perspektivische, unmaßstäbliche Darstellung eines zum Wischblatt gehörenden Tragelements mit zu diesem gehörenden Klammern.

### Beschreibung des Ausführungsbeispiels

Ein in Figur 1 dargestelltes Wischblatt 10 weist ein elastisches, beim Ausführungsbeispiel aus Federbandstahl hergestelltes Tragelement 12 für eine aus einem gummiähnlichen Material gefertigte Wischleiste 14 auf. In Figur 1 ist das langgestreckte Wischblatt 10 der Einfachheit halber in einer Position gezeichnet, in der es sich in der Praxis kaum befinden kann, weil das elastische Tragelement derart vorgespannt ist, daß die Wischleiste 14 so gekrümmt ist, wie dies durch eine strichpunktierte Linie 16 in Figur 1 angedeutet ist. Diese Krümmung ist stärker als die maximale Krümmung der zu wischenden, in der Regel sphärisch gekrümmten Kraftfahrzeugscheibe; d. h., daß das Wischblatt 10 beim Anlegen an der zu wischenden Scheibe zunächst mit seinen beiden Endbereichen an der Scheibe zur Anlage kommt, bis es schließlich unter dem Anpressdruck des zur Scheibe hin belasteten Wischerarms 18 schließlich auch der Mittelbereich des Wischblatts 10 an der Scheibe anliegt. Die eben beschriebene Krümmung des Tragelements 12 und damit des Wischblatts 10 soll bei sorgfältiger Abstimmung eine möglichst gleichmäßige Verteilung des vom angetriebenen Wischerarm 18 ausgehenden Anpressdrucks gegen die Scheibe bewirken.

Der allgemeine Aufbau des Wischblatts soll nun im folgenden anhand der Figuren 1 bis 3 erläutert werden. Die Wischleiste 14 hat eine an der Scheibe anliegende Wischlippe 18, die über einen sogenannten Kippsteg 20 mit dem Körper 22 der Wischleiste 14 verbunden ist. In den beiden einander gegenüberliegenden Längsseiten des Wischleistenkörpers 22 sind einander gegenüberliegende Längsnuten 24 und 26 angeordnet, welche sich über die gesamte Länge der langgestreckten Wischleiste 14 erstrecken. In den Längsnuten 24 und 26 sind Längsschienen 28 und 30 des Tragelements 12 untergebracht, dessen Aufbau aus Figur 5 ersichtlich ist. Beim Ausführungsbeispiel ist das Tragelement 12 aus Federbandstahl hergestellt. Es hat über seine gesamte Länge eine gleichmäßige Dicke 34. Die beiden Längsschienen 28 und 30 des Tragelements 12 sind so in den Längsnuten 24 und 26 der Wischleiste 14 angeordnet, daß deren gestreckten, in Figur 5 einander zugewandten Innenkannten 29, 31 dem Grund ihrer Längsnuten 24 bzw. 26 zugewandt (Figur 3) und die vom Mittelabschnitt 42 einer jeden Längsschiene 28 bzw. 30 aus sich den Innenkanten 29, 31 annähernden Außenkanten 3B bzw. 40 voneinander abgewandt sind. Die Ausbildung des Tragelements 12 ist so getroffen, daß seine Breite 44 an seinem Mittelabschnitt 42 größer ist als seine Breite 46 im Bereich der Enden der Längsschienen 28 und 30. Somit ergibt sich also eine Verringerung des Querschnitts der beiden Längsschienen von dem Mittelbereich 42 aus zu den Schienenenden hin. Diese Querschnittsverringerung kann aber auch durch eine Verringerung der Dicke der Längsschienen - bei gleichbleibender oder bei sich verringernder Breite der Längsschienen - erreicht werden. Zum Tragelement 12 gehören noch zwei beim Ausführungsbeispiel gleich ausgebildete Klammern 50, welche an beiden Enden der Wischleiste 14 angeordnet sind (Figur 1) und die paarweise einander benachbarten Enden der Längsschienen miteinander verbinden. Sie sorgen für eine ordnungsgemäße Sicherung der Längsschienen 28 und 30 in den Längsnuten 24 und 26 der Wischleiste 14. Diese als separate Bauelemente-ausgebildete Klammern 50 umgreifen einen Teil des Wischleistenkörpers 22 und untergreifen mit Krallenansätzen 52 die in den Längsnuten 24 und 26 liegenden Längsschienen 28 und 30. Da durch die Verringerung der Breite 44, 46 des Tragelements diese Längsschienen im Bereich von deren Enden nicht mehr aus den Längsnuten 24 und 26 ragen, greifen die Krallenansätze 52 nicht direkt unter die Längsschienen sondern sie untergreifen die unteren Wände 54 und 56 der Längsnuten 24 und 26, welche durch eine Einschnürung 58 des Wischleistenkörpers 22 gebildet sind. Durch zielgerichtetes Zusammendrücken der Klammern wird eine gewisse Verformung des Wischleistenkörpers 22 erreicht, wodurch eine Sicherung des Tragelements 12 an der Wischleiste und eine Sicherung der zum Tragelement 12 gehörenden Klammern 50 an der Wischleiste erreicht wird. Es ist jedoch auch eine formschlüssige Sicherung der Klammern 50 an den Längsschienen 28 und 30 und/oder an der Wischleiste 14 denkbar. Die Klammern 50 stabilisieren die Längsschienen 28, 30 bzw. das Tragelement 12, zu dem sie gehören.

Wenn die Länge des Wischblatts 10 und damit auch die Länge des Tragelements 12 ein gewisses Maß übersteigt, kann es zur weiteren Stabilisierung des Tragelements 12 zweckmäßig sein, zwischen den Enden der Längsschienen 28 und 30 Zwischenklammern anzuordnen, die in den Figuren 1 bis 3 mit der Bezugszahl 60 versehen sind. Die Ausführung dieser sogenannten Zwischenklammern entspricht im wesentlichen der schon beschriebenen Ausführung der Endklammern 50. Da jedoch diese Zwischenklammern im Bereich des Tragelements angeordnet sind (Figur 1), in dem die voneinander abgewandten Längskanten 38 und 40 der Längsschienen aus den Längsnuten 24, 26 ragen, können die Krallenansätze 62 dieser Zwischenklammern 60 direkt die aus den Längsnuten ragenden Längsleisten 64 der Längsschienen 28, 30 umgreifen. Die Sicherung der Zwischenklammer an der Wischleiste erfolgt genauso, wie dies für die Endklammern 50 beschrieben worden ist.

Eine weitere, vorteilhafte Ausgestaltung der Zwischenklammern 60 ist aus den Figuren 1 und 2 ersichtlich. Dort sind zwei einander benachbarte Zwischenklammern 60 zu einem einzigen Bauteil zusammengefaßt, da sie durch eine Anschlußvorrichtung 66 miteinander verbunden sind, mit deren Hilfe das Wischblatt 50 an dem angetriebenen Wischerarm 18 in an sich bekannter Weise lösbar befestigt werden kann.

Es versteht sich von selbst, daß die Änderung des Querschnitts der beiden Längsschienen 28, 30 bzw. des Tragelements 12 von dessen Mittelabschnitt 42 ausgehend den jeweiligen Gegebenheiten angepaßt werden muß, damit eine ordnungsgemäße Verteilung des Anpressdrucks über die gesamte Wischblattlänge erreicht wird.

Die Montage des Tragelements 12 an der Wischleiste 14 erfolgt dadurch, daß zunächst die beiden Längsschienen 28 und 30 in der schon beschriebenen Weise in die Längsnuten 24 und 26 der Wischleiste 14 eingesetzt werden. Danach wird das Tragelement durch Anbringen der beiden Endklammern 50 und gegebenenfalls durch das Anbringen von einer oder mehreren Zwischenklammern 60 - gegebenenfalls mit Anschlußvorrichtung 66 - komplettiert.

## Patentansprüche

1. Wischblatt (10) für Scheiben von Kraftfahrzeugen, mit einem elastischen, langgestreckten Tragelement (12) für eine langgestreckte, aus einem flexiblen Material bestehende, an der zu wischenden Scheibe anlegbaren Wischleiste (14), die an ihren Längsseiten einander gegenüberliegende Längsnuten (24, 26) aufweist, in denen mit Abstand voneinander angeordnete Längsschienen (28, 30) des Tragelements (12) liegen, dessen Mittelabschnitt (42) eine Anschlußvorrichtung (66) für einen angetriebenen Wischerarm (18) aufweist, **dadurch gekennzeichnet, daß** das Tragelement (12) zwei separate, zueinander parallel und in einer gemeinsamen Ebene angeordnete Längsschienen (28, 30) aufweist, deren beiden Enden durch jeweils eine als separates Bauelement ausgebildete Klammer (50) zusammengehalten, insbesondere miteinander verbunden sind, daß zwischen den beiden an den Enden der Längsschienen (28 und 30) angeordneten Klammern (50) wenigstens eine Zwischenklammer (60) angeordnet ist, die mit einer Anschlußvorrichtung (66) für den Wischerarm (18) versehen ist.

2. Wischblatt nach Anspruch 1, **dadurch gekennzeichnet, daß** sich der Querschnitt der beiden Längsschienen von deren Mittelbereich aus zu den Schienenenden hin verringert.

3. Wischblatt nach Anspruch 2, **dadurch gekennzeichnet, daß** die Querschnittsverringerung des Tragelements (12) durch eine Verringerung der Breite (44 bzw. 46) des Tragelements realisiert ist, wobei sich die größte Breite (44) im Mittelabschnitt (42) des Tragelements (12) befindet.

4. Wischblatt nach einem der Ansprüche 1 bis 3, **dadurch gekennzeichnet, daß** die Klammern (50) kraftschlüssig mit den Längsschienen (28, 30) des Tragelements (12) verbunden sind.

5. Wischblatt nach einem der Ansprüche 1 bis 3, **dadurch gekennzeichnet, daß** die Klammern (50) formschlüssig mit den Längsschienen (28 und 30) des Tragelements (12) verbunden sind.

6. Wischblatt nach Anspruch 5, **dadurch gekennzeichnet, daß** die Klammern (50 bzw. 60) die voneinander abgewandten Längskanten (38, 40) der Längsschienen (28, 30) mit Krallenansätzen (52 bzw. 62) umgreifen.

7. Wischblatt nach einem der Ansprüche 1 bis 6, **dadurch gekennzeichnet, daß** zumindest die Längsschienen (28, 30) des Tragelements (12) aus Federbandstahl hergestellt sind.

## Claims

1. Wiper blade (10) for windows/lenses of motor vehicles, having an elastic, elongated supporting element (12) for an elongated wiper strip (14) which consists of a flexible material, can be placed against the window/lens to be wiped and, on its longitudinal sides, has mutually opposite longitudinal grooves (24, 26) in which are situated longitudinal rails (28, 30) of the supporting element (12), which rails are arranged at a distance from each other and whose central section (42) has a connecting device (66) for a driven wiper arm (18), **characterized in that** the supporting element (12) has two separate longitudinal rails (28, 30) which are parallel to each other and are arranged in a common plane and both ends of which are held together, in particular are connected to each other, by a respective clip (50), which is designed as a separate structural element, and **in that** between the two clips (50) arranged at the ends of the longitudinal rails (28 and 30) there is arranged at least one intermediate clip (60) which is provided with a connecting device (66) for the wiper arm (18).

2. Wiper blade according to Claim 1, **characterized in that** the cross section of the longitudinal rails decreases from the central region thereof towards the rail ends.

3. Wiper blade according to Claim 2, **characterized in that** the cross-sectional decrease in the supporting element (12) is brought about by a decrease in the width (44 and 46) of the supporting element, the greatest width (44) being situated in the central section (42) of the supporting element (12).

4. Wiper blade according to one of Claims 1 to 3, **characterized in that** the clips (50) are connected in a frictional manner to the longitudinal rails (28, 30) of the supporting element (12).

5. Wiper blade according to one of Claims 1 to 3, **characterized in that** the clips (50) are connected in an interlocking manner to the longitudinal rails (28 and 30) of the supporting element (12).

6. Wiper blade according to Claim 5, **characterized in that** the clips (50 and 60) engage with claw-like extensions (52 and 62, respectively) around those longitudinal edges (38, 40) of the longitudinal rails (28, 30) which face away from each other.

7. Wiper blade according to one of Claims 1 to 6, **characterized in that** at least the longitudinal rails (28, 30) of the supporting element (12) are produced from spring band steel.

## Revendications

1. Lame d'essuie-glace (10) pour pare-brise de voitures, comportant un élément support (12) élastique longitudinal pour une barrette (14) longitudinale constituée d'une matière flexible, venant en contact avec le pare-brise à essuyer et comportant sur ses faces longitudinales des rainures longitudinales (24, 26) opposées l'une à l'autre, dans lesquelles sont insérées des glissières (28, 30), placées à une certaine distance l'une de l'autre sur l'élément support (12), dont la section médiane (42) comporte un dispositif d'accrochage (66) pour un bras d'essuie-glace (18) à entraînement mécanique,
**caractérisée en ce que**
l'élément support (12) comporte deux glissières longitudinales (28, 30) séparées, parallèles entre elles, et situées dans le même plan, dont les deux extrémités sont maintenues en position chacune respectivement par une bride (50) sous forme d'un élément séparé, et en particulier maintenues entre elles, et entre les deux brides (50) placées aux deux extrémités des glissières (28 et 30), est placée au moins une bride intermédiaire (60), munie du dispositif d'accrochage (66) du bras d'essuie-glace (18).

2. Lame d'essuie-glace selon la revendication 1,
**caractérisée en ce que**
la section des deux glissières diminue, depuis leur partie médiane, jusqu'à leurs extrémités.

3. Lame d'essuie-glace selon la revendication 2,
**caractérisée en ce que**
la diminution de section de l'élément support (12) est obtenue par la diminution de la largeur (44, 46) de cet élément support, la plus grande largeur (44) se trouvant dans la section médiane (42) de cet élément support (12).

4. Lame d'essuie-glace selon l'une quelconque des revendications 1 à 3,
**caractérisée en ce que**
les brides (50) sont reliées aux glissières longitudinales (28, 30) de l'élément support (12), par une liaison de force.

5. Lame d'essuie-glace selon l'une quelconque des revendications 1 à 3,
**caractérisée en ce que**
les brides (50) sont reliées aux glissières longitudinales (28, 30) de l'élément support (12), par une liaison de forme.

6. Lame d'essuie-glace selon la revendication 5,
**caractérisée en ce que**
les brides (50, 60) entourent les bords externes (38, 40) séparés l'un de l'autre, des glissières (28, 30) au moyen de crampons (52, 62).

7. Lame d'essuie-glace selon l'une quelconque des revendications 1 à 6,
**caractérisée en ce que**
au moins les glissières longitudinales (28, 30) de l'élément support (12) sont constituées par un feuillard en acier à ressort.
